# EUROPÄISCHE PATENTANMELDUNG

(11) **EP 4 497 966 A1**
(43) Veröffentlichungstag der Anmeldung: **29.01.2025**
(21) Anmeldenummer: 24184093.3
(22) Anmeldetag: 24.06.2024
(51) Int. Cl.: F16D 69/02, C23C 4/02, F16D 65/12, C23C 28/00

(54) **BREMSKÖRPER FÜR EIN KRAFTFAHRZEUG**

(30) Priorität: 24.07.2023 DE 102023207017
(71) Anmelder: VOLKSWAGEN AG, 38440 Wolfsburg (DE)
(72) Erfinder: Richter, Stefan, 38531 Rötgesbüttel (DE); Behm, Fabian, 38106 Braunschweig (DE); Harke, Markus, 38106 Braunschweig (DE); Klimek, Klaus Stefan, 37120 Bovenden (DE)

(57) **Zusammenfassung**

Die Erfindung betrifft einen Bremskörper (1) für ein Kraftfahrzeug, mit einem zumindest bereichsweise flächenhaften Grundkörper (G), auf dessen Flächenseiten (Fa) jeweils zumindest bereichsweise wenigstens zwei Aufbauschichten (B1, B2) aufgebracht sind. Durch die Aufbauschichten (B1, B2) wird eine Oberfläche ausgebildet, die im Montagezustand des Bremskörpers (1) am Kraftfahrzeug als Reibfläche (12) für einen Bremsbelag dient. Dabei ist eine erste Aufbauschicht (B1) vorhanden, die an den Grundkörper (G) angrenzt und eine zweite Aufbauschicht (B2), die auf die erste Aufbauschicht (B1) aufgebracht ist. Die zweite Aufbauschicht (B2) besteht aus einem Verbund aus einer Eisenlegierungsmatrix (E) mit eingelagerten Wolframkarbidpartikeln (W) oder mit eingelagerten Titankarbidpartikeln (T).

Erfindungsgemäß wird vorgeschlagen, dass zumindest die erste Aufbauschicht (B1) eine Eisenlegierung ist, die zumindest durch Molybdän in einem Bereich in Höhe von 3 bis 20 Gewichtsprozent auflegiert ist.

## Beschreibung

Die Erfindung betrifft einen Bremskörper für ein Kraftfahrzeug mit den Merkmalen vom Oberbegriff des Patentanspruchs 1.

Bremskörper, wie beispielsweise Bremsscheiben bzw. Bremsscheibenreibringe werden üblicherweise aus Grauguss hergestellt. Den Vorteilen des Graugusses, insbesondere der hohen volumetrischen Wärmekapazität und der relativen Thermoschockbeständigkeit, stehen verschiedene Nachteile gegenüber. Zu diesen zählen das hohe Gewicht, die starke Korrosionsneigung und der hohe Verschleiß des Materials im Betrieb eines Kraftfahrzeugs.

Durch Korrosion kommt es zu optischen Mängeln, da der Bremskörper das einzige Teil am Kraftfahrzeug ist, das bereits nach kürzester Zeit Rotrost ausbildet. Zusätzlich sind Bremsscheiben durch die häufig eingesetzten, offenen Aluminiumfelgen direkt einsehbar.

Bei sparsamer Fahrweise oder bei großen Rekuperationsanteilen (wenn nur selten gebremst wird) führt die Korrosionsneigung des Werkstoffs unter Umständen zu einer derart großen Beschädigung des Bremskörpers, dass dieser frühzeitig ausgetauscht werden muss.

Des Weiteren führt der Reibungsverschleiß eines Bremskörpers zu einer Emission von Feinstaub, dessen Menge die Feinstaubemissionen eines modernen Verbrennungsmotors deutlich übersteigen kann.

Um diese Nachteile zu beseitigen ist es bislang bekannt, neben der vollständigen Substitution des Materials des Bremskörpers durch harte und korrosionsbeständige Werkstoffe (wie beispielsweise Keramik) auch die Reibflächen des Bremskörpers mit einer geeigneten Beschichtung zu schützen.

So gibt es verschiedene Lösungsansätze für Beschichtungen, insbesondere der besonders beanspruchten Reibflächen des Bremskörpers, welche zum kombinierten Verschleiß- und Korrosionsschutz dienen sollen. Die Beschichtung erfolgt durch thermische Spritzverfahren zur Applikation von oxidkeramischen oder hartstoffhaltigen Beschichtungen. So werden verschiedene Beschichtungsmaterialien auf Basis metallischer Legierungen oder Verbunden aus Keramik- oder Hartmetallpartikeln in metallischer Matrix genutzt, die ein verbessertes Verhalten gegenüber Korrosion und Verschleiß bieten.

Als thermische Spritzverfahren sind beispielsweise das Hochgeschwindigkeitsschlammspritzen, das Plasmaspritzen, Kaltgasspritzen oder das Lichtbogendrahtspritzen zu nennen.

Aus der DE 10 2021 207 133 B3 der Anmelderin ist ein Bremskörper für ein Kraftfahrzeug bekannt, welchem die Merkmale vom Oberbegriff des Patentanspruchs 1 zu entnehmen sind. Konkret wird zur Erhöhung der Verschleißbeständigkeit und zur Verringerung der Rissneigung in den Aufbauschichten vorgeschlagen, dass die erste Aufbauschicht eine Dicke in einem Bereich von 40 µm bis 120 µm und die zweite Aufbauschicht eine Dicke in einem Bereich von 60 µm bis 420 µm aufweist. Dabei besteht die zweite Aufbauschicht aus einem Verbund aus einer Eisenlegierungsmatrix mit eingelagerten Wolframkarbidpartikeln, wobei das Volumen der eingelagerten Wolframkarbidpartikel zum Volumen der Eisenlegierungsmatrix einen Anteil in einem Bereich von 20% bis 40% aufweist.

In der EP 3 325 685 B1 der Anmelderin wird ein Zylinderkurbelgehäuse mit einer beschichteten Zylinderlaufbahn beschrieben. Die Beschichtung der Zylinderlaufbahn weist eine Mischschicht auf, bestehend aus einem Basismaterial und einem Haftvermittler. Auf der Mischschicht wiederum ist eine Schicht des Basismaterials aufgebracht. Das Basismaterial ist Eisen oder eine Eisenlegierung, während der Haftvermittler eine Mischung aus 20 bis 80 Gewichtsprozent Molybdän und 20 bis 80 Gewichtsprozent einer Aluminium-haltigen Legierung enthält.

Der vorliegenden Erfindung liegt die Aufgabe zu Grunde, einen Bremskörper für ein Kraftfahrzeug bereitzustellen, welcher hinsichtlich Verschleißbeständigkeit und Rissneigung verbesserte Eigenschaften aufweist.

Diese Aufgabe wird durch einen Bremskörper mit den Merkmalen von Anspruch 1 gelöst. Vorteilhafte Ausführungen beziehungsweise Weiterbildungen der Erfindung sind den abhängigen Ansprüchen zu entnehmen.

Die Erfindung geht von einem Bremskörper für ein Kraftfahrzeug, mit einem zumindest bereichsweise flächenhaften Grundkörper aus, auf dessen Flächenseiten jeweils zumindest bereichsweise wenigstens zwei Aufbauschichten aufgebracht sind. Durch die Aufbauschichten wird eine Oberfläche ausgebildet, die im Montagezustand des Bremskörpers am Kraftfahrzeug als Reibfläche für einen Bremsbelag dient. Es ist eine erste Aufbauschicht vorhanden, die an den Grundkörper angrenzt. Eine zweite Aufbauschicht ist auf die erste Aufbauschicht aufgebracht, wobei die zweite Aufbauschicht aus einem Verbund aus einer Eisenlegierungsmatrix mit eingelagerten Wolframkarbidpartikeln oder mit eingelagerten Titankarbidpartikeln besteht.

Erfindungsgemäß wird vorgeschlagen, dass zumindest die erste Aufbauschicht eine Eisenlegierung ist, die zumindest durch Molybdän (Mo) in einem Bereich in Höhe von etwa 3 bis etwa 20 Gewichtsprozent, vorzugsweise in einem Bereich in Höhe von etwa 3 bis etwa 12 Gewichtsprozent auflegiert ist. Besonders bevorzugt wird eine Auflegierung der ersten Aufbauschicht durch Molybdän in Höhe von etwa 10 Gewichtsprozent. Mit anderen Worten liegt der Masseanteil des auflegierten Molybdäns an der Gesamtmasse der ersten Aufbauschicht in einem Bereich von etwa 3 bis etwa 20 Prozent.

Gemäß einer ersten vorteilhaften Weiterbildung der Erfindung wird vorgeschlagen, dass auch die zweite Aufbauschicht zumindest durch Molybdän in einem Bereich in Höhe von etwa 3 bis etwa 20 Gewichtsprozent, vorzugsweise in einem Bereich in Höhe von etwa 3 bis etwa 12 Gewichtsprozent auflegiert ist. Besonders bevorzugt wird eine Auflegierung der zweiten Aufbauschicht durch Molybdän in Höhe von etwa 10 Gewichtsprozent.

Auf diese Weise lässt sich die Verschleiß- und Rissneigung der Bremsscheibe weiter reduzieren.

Gemäß einer anderen Weiterbildung der Erfindung wird vorgeschlagen, dass bei Vorhandensein eines Verbundes in der zweiten Aufbauschicht aus einer Eisenlegierungsmatrix mit eingelagerten Wolframkarbidpartikeln das Volumen der eingelagerten Wolframkarbidpartikel zum Volumen der Eisenlegierungsmatrix einen Anteil in einem Bereich von etwa 10 % bis etwa 20 % aufweist.

Bei Vorhandensein eines Verbundes in der zweiten Aufbauschicht aus einer Eisenlegierungsmatrix mit eingelagerten Titankarbidpartikeln weist das Volumen der eingelagerten Titankarbidpartikel zum Volumen der Eisenlegierungsmatrix nach einer Weiterbildung einen Anteil in einem Bereich von etwa 10 % bis etwa 40 %, bevorzugt einen Anteil in einem Bereich von etwa 15 % bis etwa 30 % und besonders bevorzugt einen Anteil von etwa 20 % auf.

Durch die obengenannten Volumenverteilungen kann die Rissneigung insbesondere in der zweiten Aufbauschicht weiter verringert werden, wobei eine hohe Verschleißfestigkeit und eine guter Reibwert im Einsatz des Bremskörpers erzielbar ist.

Nach einer weiteren vorteilhaften Ausbildung des Erfindungsgedankens besteht die erste Aufbauschicht aus einem austenitischen Edelstahl, welcher solche Werkstoffeigenschaften aufweist, wie sie dem Werkstoff 1.4404 nach der Norm DIN EN 10027-2 oder dem Werkstoff 316L nach der Norm AISI entsprechen.

Je nach Werkstoffeigenschaften des Grundkörpers vom Bremskörper ist es jedoch alternativ denkbar und hat sich als vorteilhaft erwiesen, wenn die erste Aufbauschicht aus einem ferritischen Edelstahl besteht, welcher solche Werkstoffeigenschaften aufweist, wie sie dem Werkstoff 1.4016 nach der Norm DIN EN 10027-2 oder dem Werkstoff 430L nach der Norm AISI entsprechen.

Durch die oben genannten Alternativen kann eine optimale Abstimmung der ersten Aufbauschicht an die jeweiligen Werkstoffeigenschaften des Grundkörpers, insbesondere auf dessen Wärmeausdehnungskoeffizienten erfolgen.

Der Bremskörper kann dadurch weitergebildet sein, dass, senkrecht zu einer Flächenerstreckung einer Flächenseite gesehen, die erste Aufbauschicht eine Dicke in einem Bereich von etwa 50 µm bis etwa 350 µm aufweist.

Nach einer anderen Weiterbildung der Erfindung weist, senkrecht zu einer Flächenerstreckung einer Flächenseite gesehen, die zweite Aufbauschicht eine Dicke in einem Bereich von etwa 60 µm bis etwa 420 µm auf.

Eine weitere vorteilhafte Ausbildung des Erfindungsgedankens schlägt vor, dass die Eisenlegierungsmatrix in der zweiten Aufbauschicht aus einem Material besteht, welches solche Werkstoffeigenschaften besitzt, wie sie dem Werkstoff 1.4404 nach der Norm DIN EN 10027-2 oder dem Werkstoff 316L nach der Norm AISI entsprechen. Diese Ausbildung ist vor allem dann zweckmäßig, wenn die erste Aufbauschicht ein solches Material aufweist.

Alternativ kann gemäß einer anderen Weiterbildung die Eisenlegierungsmatrix in der zweiten Aufbauschicht aus einem Material bestehen, welches solche Werkstoffeigenschaften besitzt, wie sie dem Werkstoff 1.4016 nach der Norm DIN EN 10027-2 oder dem Werkstoff 430L nach der Norm AISI entsprechen. Diese Ausbildung ist insbesondere dann zweckmäßig, wenn die erste Aufbauschicht ein solches Material aufweist.

Derartige Weiterbildungen können bei entsprechender Auswahl der Eisenlegierung in der ersten Aufbauschicht zu einer besseren Haftung der zweiten Aufbauschicht beitragen. Bevorzugte Ausführungsbeispiele der Erfindung sind in den Figuren dargestellt und werden anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können. Wird der Begriff "und/oder" in einer Aufzählung aus zwei oder mehr Begriffen bzw. Gegenständen verwendet, so kann dies bedeuten, dass ein beliebiger der aufgezählten Begriffe bzw. Gegenstände allein verwendet werden kann. Es kann auch bedeuten, dass eine beliebige Kombination aus zwei oder mehr der aufgezählten Begriffe bzw. Gegenstände verwendet werden kann.

Es zeigen, jeweils schematisch
- Fig. 1: ein Kraftfahrzeug mit erfindungsgemäßen Bremskörpern,
- Fig. 2: einen Querschnitt eines Bremskörpers, in Einzeldarstellung,
- Fig. 3: eine Detaildarstellung gemäß Detail III aus Fig. 2 und
- Fig. 4: die Darstellung eines Prozessschrittes im Herstellungsverfahren des Bremskörpers.

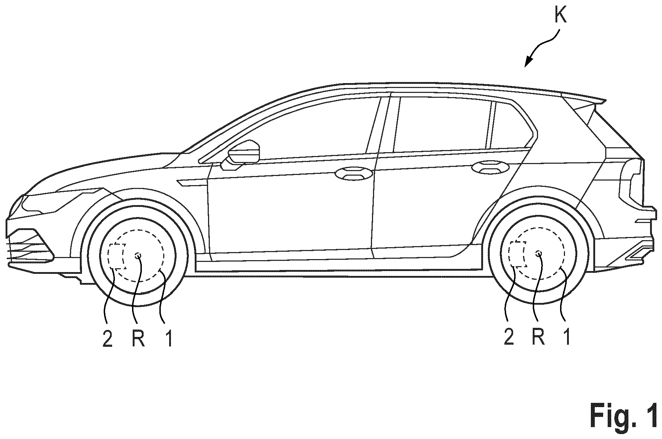

Es wird zunächst auf die Fig. 1 Bezug genommen. Darin ist ein Kraftfahrzeug K ersichtlich, welches mit erfindungsgemäßen Bremskörpern 1 ausgestattet ist. Die Bremskörper 1 sind als Scheibenbremsen ausgebildet und um eine Rotationsachse R rotierend an einem nicht näher dargestellten Radträger montiert. Bremssättel 2 enthalten jeweils zustellbare Bremsbeläge (nicht dargestellt), für die der Bremskörper 1 durch seine Bremsscheibenreibringe eine Reibfläche ausbildet. Wenn die Bremsbeläge gegen die Reibfläche der Bremskörper 1 gepresst werden, so wird das Kraftfahrzeug K abgebremst beziehungsweise gestoppt.

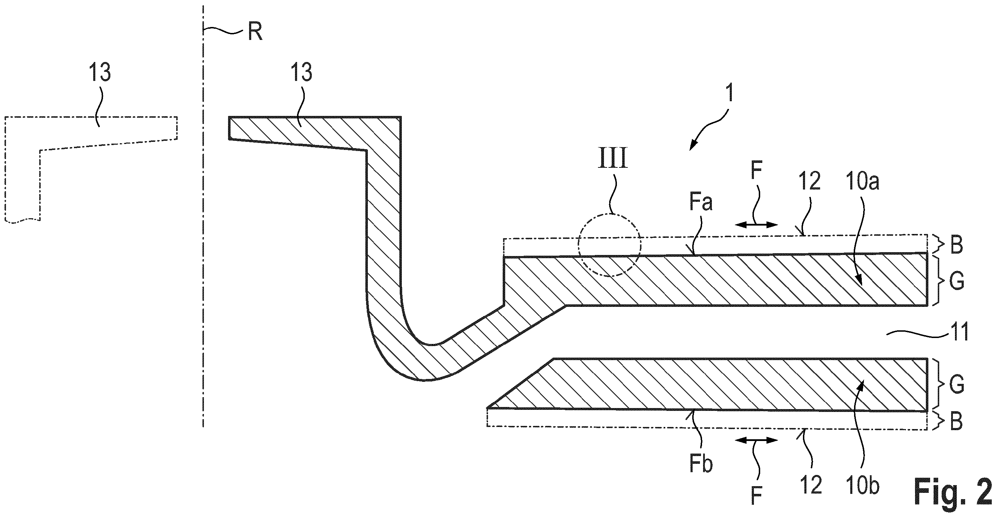

In der Fig. 2 ist ein Bremskörper 1 in Einzeldarstellung und im Querschnitt dargestellt. Der Bremskörper 1 dreht sich um die gedachte Rotationsachse R. Aus Gründen der Rotationssymmetrie ist nur eine Hälfte des Bremskörpers 1 dargestellt.

Es ist ersichtlich, dass der Bremskörper 1 im Ausführungsbeispiel als innenseitig belüftete Bremsscheibe ausgebildet ist, welche zwei Reibringe 10a und 10b aufweist. Abweichend vom Ausführungsbeispiel ist auch eine Bremsscheibe mit nur einem Reibring denkbar. Zwischen den Reibringen 10a, 10b ist ein Lüftungszwischenraum 11 vorhanden. Notwendige Abstandsrippen zwischen den Reibringen 10a, 10b sind nicht dargestellt. Jeder Reibring 10a, 10b weist einen flächigen Grundkörper G mit einer Flächenseite Fa beziehungsweise Fb auf. Jede Flächenseite Fa, Fb weist eine Flächenerstreckung F auf und ist mit einer Beschichtung B versehen. Durch die Beschichtung B wird jeweils eine beim Bremsen wirksame Reibfläche 12 ausgebildet.

Im Ausführungsbeispiel erstreckt sich die Beschichtung B jeweils über die gesamte Flächenseite Fa beziehungsweise Fb des Grundkörpers G. Abweichend davon ist es auch denkbar, dass die Beschichtung B nur auf dem Bereich der Flächenseiten Fa, Fb aufgebracht ist, der von den Bremsbelägen überstrichen wird.

Mit 13 ist eine Nabe des Bremskörpers 1 beziffert, die zur Montage des Bremskörpers 1 an einem nicht dargestellten Radträger dient.

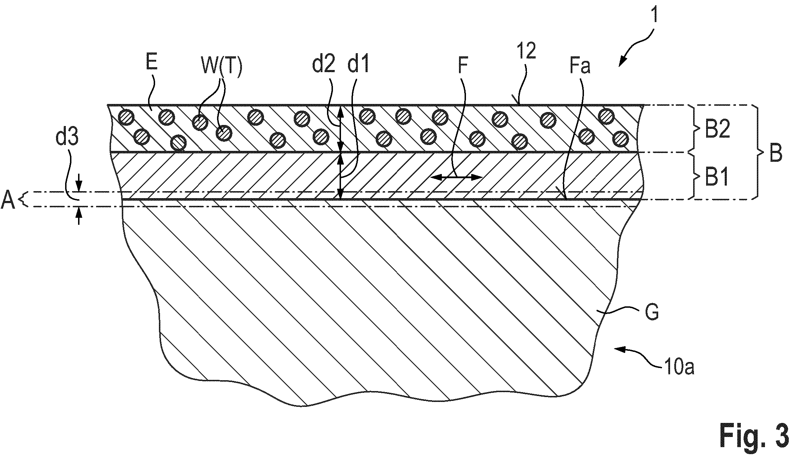

Aus der Fig. 3 ist nun ein Detailbereich aus dem Querschnitt des Bremskörpers 1 ersichtlich. Insbesondere ist erkennbar, dass die Beschichtung B aus einer ersten Aufbauschicht B1 und einer zweiten Aufbauschicht B2 besteht.

Die erste Aufbauschicht B1 ist unmittelbar auf den Grundkörper G aufgebracht, grenzt also unmittelbar an diesen an. Die zweite Aufbauschicht B2 ist wiederum auf die erste Aufbauschicht B1 aufgebracht.

Hierbei ist kenntlich gemacht, dass die erste Aufbauschicht B1, senkrecht zur Flächenerstreckung F der Flächenseite Fa (beziehungsweise Fb) eine Dicke d1 aufweist. Die Dicke d1 liegt bevorzugt in einem Bereich von etwa 50 Mikrometer bis etwa 350 Mikrometer liegt.

Die zweite Aufbauschicht B2 hingegen weist eine Dicke d2 auf, welche vorzugsweise in einem Bereich von etwa 60 Mikrometer bis etwa 420 Mikrometer liegt.

Durch diese Schichtdickenbereiche kann durch die erste Aufbauschicht B1 der Zweck einer Korrosionsschutzwirkung und der Hemmung von Anrissen aus der zweiten Aufbauschicht B2 optimal erfüllt werden.

Der angegebene Dickenbereich der zweiten Aufbauschicht B2 erfüllt die Anforderung einer hohen Verschleißbeständigkeit, wodurch Partikelemissionen durch Reibungsverschleiß deutlich verringert werden können.

Ferner ist eine Misch- oder Anbindungszone A angedeutet, welche in einem Übergang zwischen dem Grundkörper G und der angrenzenden, ersten Aufbauschicht B1 liegt. Die Anbindungszone A ist dadurch gekennzeichnet, dass hier eine bestimmte Aufmischung zwischen dem Material des Grundkörpers G und dem Material der Beschichtung B1 stattfindet. Die Anbindungszone A weist eine Dicke d3 senkrecht zur Flächenerstreckung F auf, die nur sehr dünn ist und unter 10 Mikrometer liegt. Vorzugsweise weist die Anbindungszone A eine Dicke d3 auf, welche unter 5 Mikrometer liegt.

Es hat sich gezeigt, dass durch eine derartige geringe Dicke der Anbindungszone A eine Kornbildung und eine Aufhärtung der ersten Aufbauschicht B1 einerseits verhindert werden können und andererseits dennoch eine gute Haftung der ersten Aufbauschicht B1 auf dem Grundkörper G erzielbar ist. Es können Haftzugfestigkeiten von weit über 50 MPa erreicht werden. Hierdurch können die Grundvoraussetzungen für eine hohe Verschleißbeständigkeit und für einen hohen Korrosionsschutz bereitgestellt werden.

Im Folgenden soll nun näher auf die verwendeten Materialien eingegangen werden. So ist der Grundkörper G aus Grauguss hergestellt. Er wird mitsamt der Nabe 13 (vgl. Fig. 2) mit einem üblichen Gießverfahren hergestellt.

Die erste Aufbauschicht B1 besteht aus einer Eisenlegierung, bevorzugt aus einem austenitischen Edelstahl, der eine besonders duktile und zähe Eisenlegierung darstellt. Besonders bevorzugt weist das Material der ersten Aufbauschicht B1 solche Werkstoffeigenschaften auf, wie sie dem Werkstoff 1.4404 nach der Norm DIN EN 10027-2 oder dem Werkstoff 316L nach der Norm AISI entsprechen.

Des Weiteren ist als ein wichtiges Merkmal die Eisenlegierung in der ersten Aufbauschicht B1 durch Molybdän auflegiert. Die Auflegierung liegt in einem Bereich in Höhe von etwa 3 bis etwa 20 Gewichtsprozent, bevorzugt in einem Bereich in Höhe von etwa 3 bis etwa 12 Gewichtsprozent. Besonders bevorzugt wird eine Auflegierung der ersten Aufbauschicht B1 durch Molybdän in Höhe von etwa 10 Gewichtsprozent. Mit anderen Worten liegt der Masseanteil des auflegierten Molybdäns an der Gesamtmasse der ersten Aufbauschicht B1 in einem Bereich von etwa 3 bis etwa 20 Prozent.

Es ist jedoch auch denkbar, dass die Eisenlegierung in der ersten Aufbauschicht B1 aus einem ferritischen Edelstahl besteht. Dieser kann bevorzugt solche Werkstoffeigenschaften aufweisen, wie sie dem Werkstoff 1.4016 nach der Norm DIN EN 10027-2 oder dem Werkstoff 430L nach der Norm AISI entsprechen. Aber auch in diesem Fall ist als wichtiges Merkmal die Eisenlegierung in der ersten Aufbauschicht B1 durch Molybdän in der gleichen Weise auflegiert wie zuvor beschrieben.

Die zweite Aufbauschicht B2 besteht aus einem Verbund aus einer Eisenlegierungsmatrix E mit eingelagerten Wolframkarbidpartikeln W. Es hat sich dabei insbesondere als vorteilhaft erwiesen, wenn in der zweiten Aufbauschicht B2 das Volumen der eingelagerten Wolframkarbidpartikel W zum Volumen der Eisenlegierungsmatrix E einen Anteil in einem Bereich von etwa 10 Prozent bis etwa 20 Prozent aufweist.

Als Alternative ist denkbar, dass die zweite Aufbauschicht B2 aus einem Verbund aus einer Eisenlegierungsmatrix E mit eingelagerten Titankarbidpartikeln T besteht. In diesem Fall hat es sich insbesondere als vorteilhaft erwiesen, wenn in der zweiten Aufbauschicht B2 das Volumen der eingelagerten Titankarbidpartikel T zum Volumen der Eisenlegierungsmatrix E einen Anteil in einem Bereich von etwa 10 Prozent bis etwa 40 Prozent liegt

Durch eine derartige Volumenverteilung kann einerseits eine verstärkte Rissneigung in der zweiten Aufbauschicht B2 verhindert und andererseits der Verschleiß der zweiten Aufbauschicht B2 bei guten Reibwerten und niedrigen Emissionswerten begrenzt werden.

Unabhängig davon, ob die zweite Aufbauschicht B2 eingelagerte Wolframkarbidpartikel W oder eingelagerte Titankarbidpartikel T aufweist, kann auch die zweite Aufbauschicht B2 vorteilhaft durch Molybdän auflegiert sein. Die Auflegierung kann in einem Bereich in Höhe von etwa 3 bis etwa 20 Gewichtsprozent, bevorzugt in einem Bereich in Höhe von etwa 3 bis etwa 12 Gewichtsprozent liegen. Besonders bevorzugt wird eine Auflegierung der zweiten Aufbauschicht B2 durch Molybdän in Höhe von etwa 10 Gewichtsprozent. Mit anderen Worten kann der Masseanteil des auflegierten Molybdäns an der Gesamtmasse der zweiten Aufbauschicht B2 in einem Bereich von etwa 3 bis etwa 20 Prozent liegen.

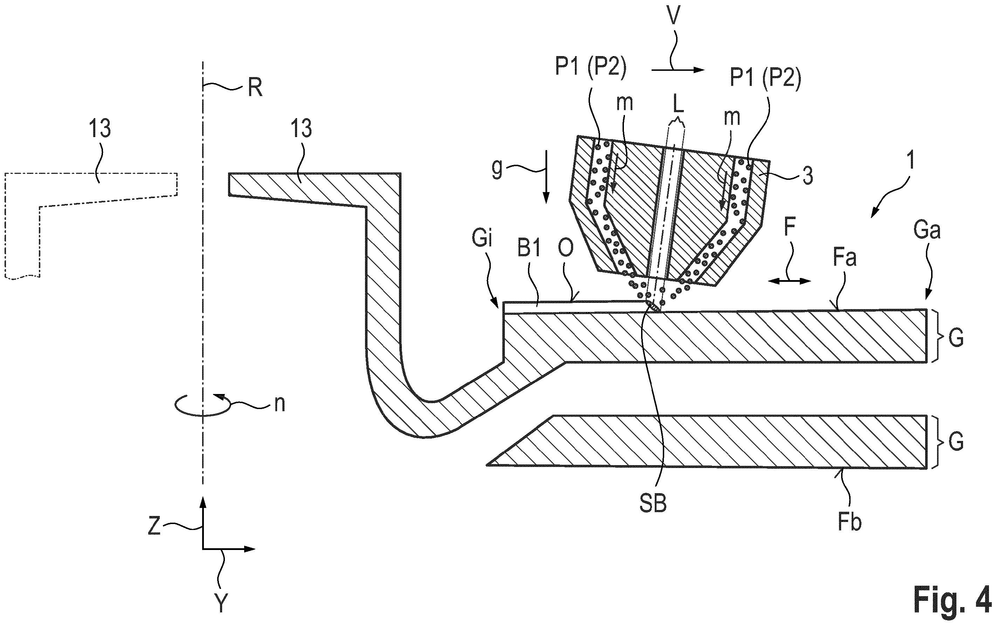

Anhand von Fig. 4 wird nun ein erster Prozessschritt in der Herstellung der Beschichtung B (vgl. Fig. 3) des Bremskörpers 1 erläutert. Bevorzugt erfolgt die Beschichtung des Bremskörpers 1 im sogenannten Hochgeschwindigkeits-Laserauftragsschweißen. So wird zunächst mit Hilfe einer nicht näher dargestellten Vorrichtung der Grundkörper G des Bremskörpers 1 mit seiner Rotationsachse R vertikal, also in einer Hochrichtung Z ausgerichtet, derart, dass die Flächenseite Fa mit ihrer Flächenerstreckung F parallel zu einer Horizontalrichtung Y ausgerichtet ist.

Der Grundkörper G, also die unbeschichtete Bremsscheibe, wurde vorher nach dem üblichen Serienfertigungsprozess hergestellt (nicht näher erläutert).

In etwa parallel zur Rotationsachse R ist ein Beschichtungswerkzeug 3 vorhanden. Das Beschichtungswerkzeug 3 ist einachsig orthogonal beziehungsweise radial zur Rotationsachse R und parallel zur Horizontalrichtung Y beweglich. Es weist mindestens eine Laseroptik zur Erzeugung eines Laserstrahls L und eine Düse für den Ausstoß eines pulverförmigen Beschichtungsmaterials P1 auf. An das Beschichtungswerkzeug 3 werden mindestens eine Laserquelle (nicht dargestellt) und mindestens ein Pulverförderer (nicht dargestellt) angeschlossen.

Anschließend wird der Grundkörper G in eine schnelle Rotation versetzt, so dass er sich mit einer bestimmten Drehzahl n um die Rotationsachse R dreht. Die Beschichtung des Grundkörpers G beginnt an einer radialen Innenposition Gi und wird durch eine radiale Zustellbewegung V in Richtung einer radialen Außenposition Ga des Grundkörpers G fortgesetzt.

Gleichzeitig mit der Erzeugung des Laserstrahls L wird der erwähnte Pulverförderer derart in Gang gesetzt, dass das pulverförmige Beschichtungsmaterial P1 mit einem bestimmten Pulvermassenstrom m gefördert wird. Das pulverförmige Beschichtungsmaterial P1 besteht aus Pulverkörnern mit sphärischer, also kugelförmiger Gestalt und weist eine Materialzusammensetzung auf, welche der herzustellenden, ersten Aufbauschicht B1 entspricht. Das pulverförmige Beschichtungsmaterial P1 enthält also Bestandteile einer Eisenlegierung (316L oder 430L) sowie Molybdän.

Je nach der momentanen Position des Beschichtungswerkzeugs 3 wird die Drehzahl n des Grundkörpers G angepasst, um über die gesamte zu beschichtende Fläche der Flächenseite Fa eine konstante Dicke der Aufbauschicht B1 zu erzielen.

Bei dem Beschichtungsverfahren wird die Strahlungsintensität des Laserstrahls L derart eingestellt, dass eine Überhitzung der jeweils aufzubringenden Aufbauschicht B1 beziehungsweise B2 nicht stattfindet.

Bei dem dargestellten Beschichtungsverfahren wird der Beschichtungswerkstoff, also das pulverförmige Beschichtungsmaterial P1 aufgeschmolzen. Dafür wird das pulverförmige Beschichtungsmaterial P1 durch das Beschichtungswerkzeug 3 gezielt dem auf den Grundkörper G auftreffenden Laserstrahl L, also dem Laserspot zugeführt. Dort wird das pulverförmige Beschichtungsmaterial P1 aufgeschmolzen und bildet ein Schmelzbad SB aus.

Der Grundkörper G hingegen bildet selbst kein Schmelzbad aus, sondern wird nur lokal bis auf eine Temperatur kurz unter seiner Schmelztemperatur erwärmt. Es kommt daher nicht zu einer Einbringung ungeschmolzener Partikel des pulverförmigen Beschichtungsmaterials P1 in eine Schmelze des Grundkörpers G, sondern zur Abscheidung eines Schmelzbades SB aus den Partikeln des pulverförmigen Beschichtungsmaterials P1. An der unmittelbaren Grenzfläche zwischen dem schmelzflüssigen Beschichtungsmaterial (im Bild P1) und der lokal stark erwärmten Oberfläche des Substrats (hier Grundkörper G) kommt es durch einen Diffusionsprozess zu einer sehr guten Anbindung des Beschichtungsmaterials (hier P1) an das Substrat (hier Grundkörper G), ohne dass eine erhöhte Aufmischung der beteiligten Materialien stattfindet.

Dadurch, dass das pulverförmige Beschichtungsmaterial P1 in Richtung oder in etwa in Richtung der Erdbeschleunigung g in den Laserstrahl L gebracht wird, kann dieses längstmöglich im Laserstrahl L verbleiben und es kann so eine gute Aufschmelzung stattfinden.

Dabei ist zu erwähnen, dass während der Beschichtung das Beschichtungswerkzeug 3 mit einer Zustellbewegung v radial nach außen bewegt wird.

Ferner werden eine Zustellbewegung v des Beschichtungswerkzeugs und eine Umdrehungsgeschwindigkeit des Bremskörpers 1 derart aufeinander abgestimmt, dass sich im Lauf einer vollständigen Umdrehung des Bremskörpers 1 um 360 Grad eine gewisse Überlappung von einer im Lauf der Umdrehung aufgebrachten Beschichtungsspur zu einer zuvor aufgebrachten Beschichtungsspur ergibt.

Wenn die erste Aufbauschicht B1 in gewünschter Weise auf den Grundkörper G aufgebracht ist, so erfolgt die Auftragung der zweiten Aufbauschicht B2 auf eine Oberfläche O der ersten Aufbauschicht B1 in entsprechender Weise. Dann wird Beschichtungsmaterial P2 zugeführt, welches der Materialzusammensetzung der herzustellenden, zweiten Aufbauschicht B2 entspricht, also Bestandteile einer Eisenlegierung (316L oder 430L), Wolfram- oder Titankarbid sowie Molybdän aufweist.

Das Beschichtungswerkzeug 3 wird dabei analog zum ersten Prozessschritt wiederum radial von innen nach außen zugestellt. Allerdings wird zur Aufbringung der zweiten Aufbauschicht B2 nunmehr das zweite, pulverförmige Beschichtungsmaterial P2 dem Laserstrahl L zugeführt. Auch das zweite, pulverförmige Beschichtungsmaterial P2 liegt bevorzugt in Pulverkörnern mit sphärischer Gestalt vor.

### Bezugszeichenliste

| | | | |
|---|---|---|---|
| 1 | Bremskörper | V | Zustellbewegung |
| 2 | Bremssattel | W | Wolframkarbidpartikel |
| 3 | Beschichtungswerkzeug | Y | Horizontalrichtung |
| 10a, b | Reibring | Z | Hochrichtung |
| 11 | Lüftungszwischenraum | | |
| 12 | Reibfläche | | |
| 13 | Nabe | | |
| A | Anbindungszone | | |
| B | Beschichtung | | |
| B1 | erste Aufbauschicht | | |
| B2 | zweite Aufbauschicht | | |
| d1 | Dicke | | |
| d2 | Dicke | | |
| d3 | Dicke | | |
| E | Eisenlegierungsmatrix | | |
| F | Flächenerstreckung | | |
| Fa, Fb | Flächenseite | | |
| G | Grundkörper | | |
| Gi | radiale Innenposition | | |
| Ga | radiale Außenposition | | |
| g | Erdbeschleunigung | | |
| K | Kraftfahrzeug | | |
| L | Laserstrahl | | |
| m | Pulvermassenstrom | | |
| n | Drehzahl | | |
| O | Oberfläche | | |
| P1 | erstes pulverförmige Beschichtungsmaterial | | |
| P2 | zweites pulverförmige Beschichtungsmaterial | | |
| R | Rotationsachse | | |
| SB | Schmelzbad | | |
| T | Titankarbidpartikel | | |

## Patentansprüche

1. Bremskörper (1) für ein Kraftfahrzeug (K), mit einem zumindest bereichsweise flächenhaften Grundkörper (G), auf dessen Flächenseiten (Fa, Fb) jeweils zumindest bereichsweise wenigstens zwei Aufbauschichten (B1, B2) aufgebracht sind, wobei durch die Aufbauschichten (B1, B2) eine Oberfläche ausgebildet wird, die im Montagezustand des Bremskörpers (1) am Kraftfahrzeug (K) als Reibfläche (12) für einen Bremsbelag dient, wobei eine erste Aufbauschicht (B1) vorhanden ist, die an den Grundkörper (G) angrenzt und eine zweite Aufbauschicht (B2), die auf die erste Aufbauschicht (B1) aufgebracht ist, wobei die zweite Aufbauschicht (B2) aus einem Verbund aus einer Eisenlegierungsmatrix (E) mit eingelagerten Wolframkarbidpartikeln (W) oder mit eingelagerten Titankarbidpartikeln (T) besteht, **dadurch gekennzeichnet, dass** zumindest die erste Aufbauschicht (B1) eine Eisenlegierung ist, die zumindest durch Molybdän in einem Bereich in Höhe von 3 Gew.-% bis 20 Gew.-% auflegiert ist.

2. Bremskörper (1) nach Anspruch 1, **dadurch gekennzeichnet, dass** auch die zweite Aufbauschicht (B2) zumindest durch Molybdän in einem Bereich in Höhe von 3 Gew.-% bis 20 Gew.-% auflegiert ist.

3. Bremskörper (1) nach Anspruch 1 oder 2, **dadurch gekennzeichnet, dass** das Volumen der eingelagerten Wolframkarbidpartikel (W) zum Volumen der Eisenlegierungsmatrix (E) einen Anteil in einem Bereich von 10 % bis 20 % aufweist.

4. Bremskörper (1) nach Anspruch 1 oder 2, **dadurch gekennzeichnet, dass** das Volumen der eingelagerten Titankarbidpartikel (T) zum Volumen der Eisenlegierungsmatrix (E) einen Anteil in einem Bereich von 10 % bis 40 % aufweist.

5. Bremskörper (1) nach einem der vorhergehenden Ansprüche, **dadurch gekennzeichnet, dass** die Eisenlegierung in der ersten Aufbauschicht (B1) aus einem austenitischen Edelstahl besteht, welcher solche Werkstoffeigenschaften aufweist, wie sie dem Werkstoff 1.4404 nach der Norm DIN EN 10027-2 oder dem Werkstoff 316L nach der Norm AISI entsprechen.

6. Bremskörper (1) nach einem der vorhergehenden Ansprüche 1 bis 4, **dadurch gekennzeichnet, dass** die Eisenlegierung der ersten Aufbauschicht (B1) aus einem ferritischen Edelstahl besteht, welcher solche Werkstoffeigenschaften aufweist, wie sie dem Werkstoff 1.4016 nach der Norm DIN EN 10027-2 oder dem Werkstoff 430L nach der Norm AISI entsprechen.

7. Bremskörper (1) nach einem der vorhergehenden Ansprüche, **dadurch gekennzeichnet, dass**, senkrecht zu einer Flächenerstreckung (F) einer Flächenseite (Fa, Fb) gesehen, die erste Aufbauschicht (B1) eine Dicke (d1) in einem Bereich von 50 µm bis 350 µm aufweist.

8. Bremskörper (1) nach einem der vorhergehenden Ansprüche, **dadurch gekennzeichnet, dass**, senkrecht zu einer Flächenerstreckung (F) einer Flächenseite (Fa, Fb) gesehen, die zweite Aufbauschicht (B2) eine Dicke (d2) in einem Bereich von 60 µm bis 420 µm aufweist.

9. Bremskörper (1) nach einem der vorhergehenden Ansprüche, **dadurch gekennzeichnet, dass** die Eisenlegierungsmatrix (E) in der zweiten Aufbauschicht (B2) aus einem Material besteht, welches solche Werkstoffeigenschaften besitzt, wie sie dem Werkstoff 1.4404 nach der Norm EN10027-2 oder dem Werkstoff 316L nach der Norm AISI entsprechen.

10. Bremskörper (1) nach einem der vorhergehenden Ansprüche 1 bis 8, **dadurch gekennzeichnet, dass** die Eisenlegierungsmatrix (E) in der zweiten Aufbauschicht (B2) aus einem Material besteht, welches solche Werkstoffeigenschaften besitzt, wie sie dem Werkstoff 1.4016 nach der Norm DIN EN 10027-2 oder dem Werkstoff 430L nach der Norm AISI entsprechen.
